# EUROPÄISCHE PATENTSCHRIFT

(11) **EP 3 220 110 B1**
(45) Veröffentlichungstag und Bekanntmachung des Hinweises auf die Patenterteilung: **07.08.2019**
(21) Anmeldenummer: 17160634.6
(22) Anmeldetag: 13.03.2017
(51) Int. Cl.: G01G 21/28, G01G 23/00

(54) **WÄGEVORRICHTUNG MIT SCHALTSCHRANK**
WEIGHING DEVICE WITH SWITCH CABINET
DISPOSITIF DE PESAGE AVEC ARMOIRE DE DISTRIBUTION

(30) Priorität: 14.03.2016 DE 102016104645
(43) Veröffentlichungstag der Anmeldung: 20.09.2017
(73) Patentinhaber: WIPOTEC GmbH, 67657 Kaiserslautern (DE)
(72) Erfinder: Schulzki, Alexander, 67705 Stelzenberg (DE)
(74) Vertreter: Eder Schieschke & Partner mbB

(56) Entgegenhaltungen:
- DE-U1- 8 508 424

## Beschreibung

Die Erfindung betrifft eine Wägevorrichtung mit den Merkmalen des Oberbegriffs des Anspruchs 1.

Bei einer Reinigung einer derartigen Wägevorrichtung, insbesondere einer Reinigung mit aggressiven Reinigungsmedien und mit hohem Druck (beispielsweise mittels Dampfstrahler), ist ein Eindringen von Feuchtigkeit ins Innere der Wägezelle und ins Innere des Schaltschranks zu befürchten.

Zur Temperierung, insbesondere Kühlung einer Wägezelle wird in der DE 10 2008 056 514 B4 und der DE8508424U1 ein Durchleiten von gekühltem Gas durch das Gehäuse der Wägezelle vorgeschlagen. Hierbei erfolgt der Austritt des Gases zumindest teilweise über einen Durchlass des Gehäuses, um bei einem Reinigen bzw. Spülen der Wägezelle zu verhindern, dass zwischen Lastaufnehmer und Gehäuseoberfläche Reinigungs- oder Spülflüssigkeit in das Wägezellengehäuse eindringen kann.

Derartige Wägevorrichtungen unterliegen aber auch dem Einfluss einer Umgebung, die eine gewisse Luftfeuchtigkeit aufweist. Dringt die Feuchtigkeit ins Innere einer Wägezelle und ins Innere eines Schaltschranks ein, so können hierdurch Messfehler bei einem Wiegevorgang auftreten oder gar Schäden an Wägezelle und elektrischen Schaltungen verursacht werden. Ein Eindringen von Feuchtigkeit ist in gewissen Maßen aber selbst mit druckdichten Dichtungen und Gehäusen nicht zu vermeiden.

Der vorliegenden Erfindung liegt daher die Aufgabe zugrunde, eine Wägevorrichtung zu schaffen, die vorstehend genannte Nachteile vermeidet, eine Trocknung der Innenluft der Wägevorrichtung, insbesondere des Schaltschranks und der Wägezelle, gewährleistet und/oder ein Eindringen von Feuchtigkeit in das Innere einer Wägevorrichtung vermindert oder gar vermeidet.

Diese Aufgabe wird erfindungsgemäß durch eine Wägevorrichtung mit den Merkmalen des Anspruchs 1 gelöst.

Erfindungsgemäß weist die Wägevorrichtung Mittel auf, die ein Durchströmen des Innenraums eines Wägezellengehäuses und nachfolgend des Innenraums eines Schaltschranks mit Gas während eines Reinigungsbetriebs und/oder auch während eines Wägebetriebs ermöglichen. Durch ein derartiges Durchströmen mit Gas, beispielsweise Luft, kann ein Abführen von Feuchtigkeit aus dem Innenraum bzw. den Innenräumen gewährleistet werden. Hierbei kann das eingeleitete Gas, insbesondere Luft, einen entsprechenden geringen Feuchtegehalt und/oder eine erhöhte Temperatur aufweisen, so dass das Gas zumindest zusätzliche Feuchtigkeit aufnehmen kann.

Auf diese Weise kann feuchte Luft aus dem Gehäuseinneren abtransportiert werden, bevor sie sich an Oberflächen niederschlägt. Zudem kann Feuchtigkeit, welche sich bereits an Oberflächen niedergeschlagen hat, aufgenommen und abtransportiert werden, so dass auch bereits feuchte Oberflächen durch den Luftstrom getrocknet werden.

Zur Versorgung mit Gas mit einem geringen Überdruck weist der Schaltschrank an seiner Außenseite oder in seinem Innenraum einen Gasdruckanschluss auf, der mit einer entsprechenden Quelle, beispielsweise Druckluftquelle verbunden werden kann. Der Schaltschrank einer Wägevorrichtung dient der Aufnahme von elektrischen und elektronischen (Bau-)Elementen, wie beispielsweise elektrische Stromversorgungseinrichtung (Netzteil, Trafo, Schaltnetzteil), Netzfilter (EMV) gegen Störungen auf Netzseite, sowie Steuerung, Busverteilersystem und Kommunikationselektronik für die Wägezelle. Zudem können sich im Schaltschrank weitere Elemente wie ein Druckminderer, ein Druckregulator sowie ein Druckverteiler (zum Anschluss mehrerer Wägezellen an den Luftstrom) befinden. In jedem Fall sind nach der Erfindung Schaltschrank und Wägezellengehäuse separat voneinander ausgebildet und weisen eigene gasdichte Gehäuse auf.

In bevorzugter Ausgestaltung der Erfindung führt das durchströmende Gas, insbesondere (Spül-)Luft, zu keiner wesentlichen Druckerhöhung der Innenräume gegenüber der Umgebung der Wägevorrichtung. Allenfalls wenige Millibar oder gar Mikrobar Druckunterschied im Spülstrom des Gases zur Umgebung reichen aus, um einen Gasstrom, insbesondere Luftstrom und -lauf zu erzeugen, welcher eine Trockenhaltung oder Trocknung der durchspülten Innenräume bewirkt.

In weiterer Ausgestaltung der Erfindung sind der Schaltschrank und das Wägezellengehäuse gasdicht ausgebildet, so dass ein Eindringen von Umgebungsluft vermindert oder gar verhindert wird. Auch hierdurch wird das Eindringen und die Bildung von Feuchtigkeit im Inneren verringert. Zudem kann durch eine gasdichte Ausbildung der Gasstrom besser geregelt und aufrecht erhalten werden, da ungeregelte Strömungsstörungen, wie beispielsweise durch Abluft, Nebenluft etc. verursacht, verringert oder gar vermieden werden können.

Der Begriff gasdicht bzw. im Wesentlichen gasdicht bedeutet im Sinne der Erfindung, dass bei nur geringem Druckunterschied (beispielswiese kleiner als 1 bar, vorzugsweise kleiner als 0,05 bar, insbesondere kleiner gleich 10 µbar) zwischen Gehäuseinnerem und Umgebung keine Umgebungsluft in die Wägevorrichtung bzw. das jeweilige Gehäuse (des Antriebs, der Wägezelle, des Schaltschranks) eindringt. Ein Austreten von Gas an anderen Stellen (Druckausgleichsmebran, Überdruckventil, etc.) als an der wenigstens einen vorgesehenen Austrittsöffnung, kann dagegen zumindest in geringen Maßen möglich sein. Die Hauptfunktion, nämlich Durchströmen aller Innenbereiche mit Gas (mit sehr geringer oder im Wesentlichen keiner Feuchtigkeit) zum Zwecke der Trocknung/Entfeuchtung wird hierdurch nicht oder zumindest nicht wesentlich beeinträchtigt.

Als Strömungsleitmittel können Leitbleche, Platinen, offene oder geschlossene Luftkanäle etc. dienen. Für die Gaszufuhr und Durchleitung durch den Schaltschrank kann als Strömungsleitmittel vorzugsweise ein geschlossener Kanal verwendet werden, um den Durchsatz des Luftstroms durch alle Gehäuse zu erhöhen.

In bevorzugter Ausgestaltung der Erfindung sind die Strömungsleitmittel für die Gaszufuhr zum Wägezellengehäuse (oder im Falle weiterer Gehäuse zu einem Getriebe- oder Motorgehäuse) als ein im Wesentlichen gasdichter Kanal, gasdichtes Rohr oder gasdichter Schlauch ausgeführt. Zugeführte Luft (durch-)strömt daher zuerst in den Innenraum des Wägezellengehäuses und erst nachfolgend in den Innenraum des Schaltschranks. Fehlströme können hierbei vorteilhafterweise vermieden werden.

In weiterer Ausgestaltung der Erfindung kann der erste und/oder der zweite Anschluss als ein Stellfuß der Wägezelle ausgebildet sein. Da ein derartiger Stellfuß mechanisch und strömungstechnisch direkt oder über einen (Hohl-)Rahmen mit dem Schaltschrank verbunden ist, kann in dieser Ausgestaltung vorteilhafterweise ein separater zusätzlicher Anschluss vermieden werden.

In besonders vorteilhafter Ausgestaltung der Erfindung sind der erste und der zweite Anschluss in Form eines einzigen kombinierten Anschlusses mit wenigstens zwei im Querschnitt getrennten Kammern (beispielsweise ineinander verschachtelt, vorzugsweise koaxial, oder nebeneinander) ausgeführt. Hierdurch kann eine weitere Verbindung bzw. separate Anschlussstelle zwischen Schaltschrank und Wägezellengehäuse vermieden werden.

In weiterer Ausgestaltung der Erfindung weist ein derartiger kombinierter Anschluss zusätzlich zu den beiden luftführenden Kammern (im Querschnitt) bzw. Kanälen (im Längsschnitt) zudem wenigstens eine weitere Kammer bzw. Kanal für elektrische Verbindungen (Kabel), beispielsweise zu Zwecken der Stromversorgung, Bereitstellung der signaltechnischen Kommunikation mit der Wägezelle, etc. auf. Entsprechend kann vorteilhafterweise eine separate sonst hierfür erforderliche Verbindung zwischen Schaltschrank und Wägezellengehäuse entfallen.

In vorteilhafter Ausgestaltung der Erfindung umfasst die Wägevorrichtung wenigstens eine weitere Wägezelle, wobei die jeweiligen gasdichten Gehäuse der wenigstens zwei Wägezellen jeweils einen weiteren ersten und zweiten Anschluss aufweisen, über welche die wenigstens zwei Wägezellen seriell untereinander oder jede Wägezelle für sich mit dem Schaltschrank im Wesentlichen gasdicht in Verbindung stehen. Hierdurch können auch mehrspurige Wägebänder mit separaten Wägezellen auf einfache Art und Weise von Gas durchströmt werden, um eine Trockenhaltung oder Trocknung der durchspülten Innenräume zu bewirken.

In weiterer Ausgestaltung der Erfindung weist die Wägevorrichtung einen Fördermittelantrieb in einem Gehäuse auf, wobei dieses Antriebsgehäuse im Wesentlichen gasdicht ausgebildet ist und über einen dritten Anschluss für eine Gaszufuhr und einen vierten Anschluss für eine Gasabfuhr mit dem Gehäuse der Wägezelle im Wesentlichen gasdicht in Verbindung steht. Hierdurch wird nicht nur die Wägezelle sondern auch das Antriebsgehäuse (beispielsweise in Form eines gemeinsamen Gehäuses für die Aufnahme von Antriebsmitteln, insbesondere von Motor und Getriebe oder separaten Gehäusen für Motor und Getriebe von Gas durchströmt.

In bevorzugter Ausgestaltung der Erfindung steht der Gasdruckanschluss mit dem dritten Anschluss mittels weiterer Strömungsleitmittel in Verbindung, so dass zumindest ein Teil eines zugeführten Gases zuerst den Innenraum des Antriebsgehäuses, nachfolgend den Innenraum des Wägezellengehäuses oder in umgekehrter Reihenfolge und nachfolgend den Innenraum des Schaltschranks durchströmt und danach über die Austrittsöffnung aus dem Schaltschrank austritt. In dieser Ausgestaltung wird auf einfache Art und Weise eine vorteilhafte Durchströmung aller gewünschten Bereiche bzw. Innenräume mit Gas und optimaler Verteilung gewährleistet.

Selbstverständlich ist es auch denkbar, dass weitere Bereiche oder Teile einer Wägevorrichtung in der vorstehend erläuterten Art von Gas durchströmt werden, um eine Trockenhaltung oder Trocknung auch dieser Bereiche oder Teile bzw. deren Oberflächen zu bewirken. So kann beispielsweise eine Anzeigeeinheit bzw. ein Display einer Wägevorrichtung - integriert in einen Bereich von Wägezellengehäuse, Antriebsgehäuse oder Schaltschrank (beispielsweise in Form eines Schaltschrankdeckels zur Abdeckung einer Zugangsöffnung) - mit Gas durchströmt werden. Ist die Anzeigeneinheit dagegen in einem separaten, eigenen Gehäuse angeordnet, kann dieses Gehäuse an beliebiger Stelle, vorzugsweise seriell (bzw. in strömungstechnischer Reihenschaltung der Gehäuse) in die Reihe der vorgenannten Gehäuse (Schaltschrank, Wägezellengehäuse, Antriebsgehäuse) eingefügt werden, so dass auch die Anzeigeneinheit (bzw. dessen in einem Gehäuse befindliche Elektronik) von Gas durchströmt wird.

In weiterer Ausgestaltung der Erfindung oder unabhängig von dem vorstehend Erläuterten und damit als eigenständige Erfindung kann die Wägevorrichtung einen Schaltschrank umfassen, welcher wenigstens einen (eigenständigen mit eigenen Wandungen ausgebildeten) Teil eines Untergestells der Wägevorrichtung bildet. Vorzugsweise wird hierdurch der Grundriss der Wägevorrichtung (ohne Schaltschrank) in seinen Abmessungen nicht überschritten. Hierbei kann der Schaltschrank als (modulares) separates Teil ausgebildet sein, so dass die Gehäusedichtigkeit (durch ein eigenständiges Gehäuse des Schaltschranks) gewährleistet wird. Besonders bevorzugt weist der Schaltschrank, insbesondere in den Außenbereichen (beispielsweise Ecken) des Grundrisses der Wägevorrichtung wenigstens einen Standfuß auf, so dass eine optimale Standfestigkeit der Wägevorrichtung gewährleistet wird.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine Darstellung eines schematischen Aufbaus einer erfindungsgemäßen Wägevorrichtung;
- Fig. 2: eine perspektivische (Seiten-)Ansicht einer erfindungsgemäßen Wägevorrichtung;
- Fig. 3: eine um 90° gedrehte perspektivische (Vorder-)Ansicht der Wägevorrichtung nach Fig. 2;
- Fig. 4: eine schematische Schnittansicht einer ersten Ausführungsform eines kombinierten Anschlusses und
- Fig. 5: eine schematische Schnittansicht einer zweiten Ausführungsform eines kombinierten Anschlusses.

Die im Aufbau schematisch dargestellte Wägevorrichtung umfasst einen Schaltschrank 1, in dem sich elektrische oder elektronische Mittel bzw. Bauelemente zur Bereitstellung der Stromversorgung einer Wägezelle 3 und/oder der Kommunikation mit der Wägezelle 3, wie beispielsweise Transformatoren, Schaltnetzteile, Schaltungen und elektronische Filter zur Verbesserung der elektromagnetischen Verträglichkeit (EMV), Busverteilungssysteme, Buskoppler, etc. befinden.

Obwohl im Folgenden die Erfindung der Einleitung von Luft erläutert wird, dient dies nur als Beispiel, so dass anstelle der Luft selbstverständlich auch ein anderes Gas verwendet werden kann.

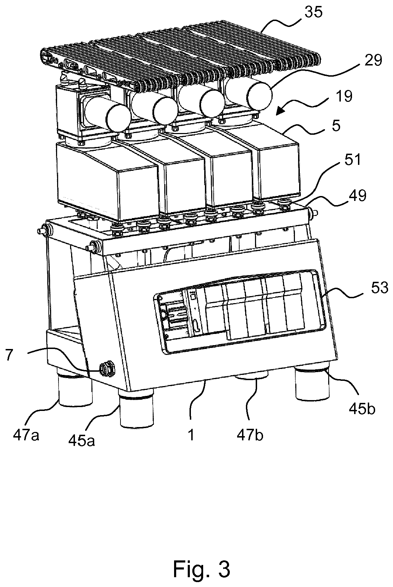

Der Schaltschrank weist einen Anschluss 7 auf, welcher mit einer nicht näher dargestellten Druckluftquelle 9 verbunden werden kann. Der Anschluss 7 kann beispielsweise als außen am Schaltschrankgehäuse sitzende Anschlussmuffe (Fig. 3) oder als Verbindung zu weiterführenden (innenliegenden) Strömungsleitmittel, insbesondere Luftrohre oder -schläuche ausgebildet sein.

Die trockene Druckluft ist im Folgenden an einen vorzugsweise im Schaltschrank angeordneten Verteiler 25 angeschlossen, durch welchen eine parallele Verteilung auf mehrere, beispielsweise vier, Luftströme (trockene Spülluft) erfolgt. Hierdurch können auch Wägevorrichtungen mit mehr als einer Wägezelle, insbesondere zur Realisierungen von mehreren, vorzugsweise parallelen Wägespuren erfindungsgemäß mit Spülluft versorgt werden. Selbstverständlich kann ein Verteiler 25 im Falle einer Wägevorrichtung mit nur einer Wägezelle entfallen.

Da eine herkömmliche Druckluftquelle 9 meist einen Überdruck von mehreren bar, beispielsweise 2 bar oder höher aufweist, kann der Verteiler 25 zusätzlich zur Verteilung oder stattdessen auch als Druckminderer 25 ausgebildet sein. Durch diesen Druckminderer 25 wird die Druckluft auf einen sehr geringen Überdruck von wenigen Millibar, beispielsweise 0,02 bar, oder wenigen Mikrobar, beispielsweis 10 µbar begrenzt und vorzugsweise konstant auf einen derartigen Wert gehalten.

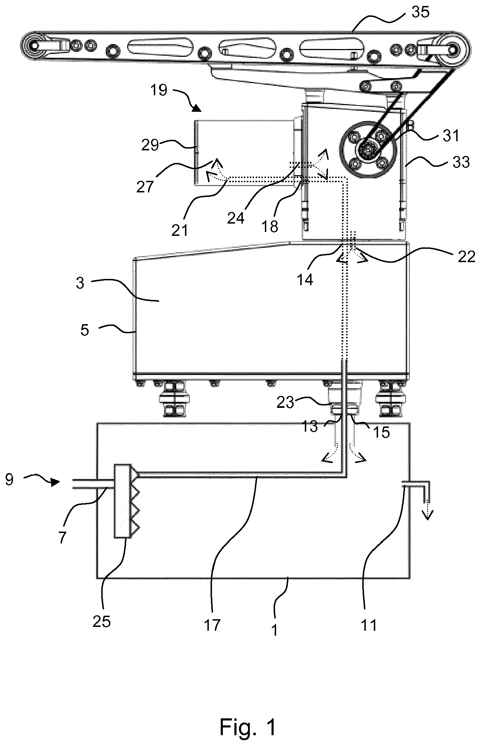

An den Verteiler und/oder Druckluftminderer 25 ist, als Strömungsleitmittel beispielsweise ein Schlauch oder Rohr 17 luftdicht angeschlossen. Das Rohr oder der Schlauch 17 erstreckt sich, wie aus Fig. 1 ersichtlich, zumindest bis in ein Gehäuse 5 der Wägezelle 3, wobei vorzugsweise auch eine Weiterführung in andere Gehäuse, nämlich Getriebegehäuse 33 oder Motorgehäuse 29 (siehe gestrichelt dargestellte Weiterführung des Rohrs oder Schlauchs 17) möglich ist.

Auf diese Weise wird zugeführte Luft ins Innere des Wägezellengehäuses 5, ins Innere des Getriebegehäuses 33 und vorzugsweise ins Innere des Motorgehäuses 29 geführt, so dass zugeführte Luft (zuerst) im Inneren des an den Schaltschrank 1 angeschlossenen Gehäuses, vorzugsweise im Inneren des Motorengehäuses 29 am Luftaustritt 21 ausströmt (Pfeile bei 21). Entsprechend wird das Gehäuse 29 mit Spülluft durchströmt.

Das Gehäuse 29 ist mit dem Getriebegehäuse 33 über eine (zur Umgebung luftdichten) Verbindung 24 verbunden, über welche Luft infolge der in das Motorgehäuse zugeführten Luft in das Getriebegehäuse 33 abgeführt wird (Pfeile bei 24). Auf diese Weise wird auch das Innere des Getriebegehäuses 33 vom Luftstrom (Spülluft) durchströmt.

Das Getriebegehäuse 33 ist mit dem Wägezellengehäuse 5 über eine (zur Umgebung luftdichten) Verbindung 22 verbunden, über welche Luft - infolge der in das Motorgehäuse zugeführten und in das Getriebegehäuse 33 abgeführten Luft - abgeführt wird (Pfeile bei 22). Auf diese Weise wird auch das Innere des Wägezellengehäuses 5 vom Luftstrom (Spülluft) durchströmt.

Das Wägezellengehäuse 5 ist mit dem Schaltschrank 1 über eine (zur Umgebung luftdichten) Verbindung 15 verbunden, über welche Luft - infolge der in das Motorgehäuse 29 zugeführten und in das Getriebegehäuse 33 und Wägezellengehäuse 5 abgeführten Luft - abgeführt wird (Pfeile bei 15). Auf diese Weise wird auch das Innere des Schaltschranks 1 vom Luftstrom (Spülluft) durchströmt. Der Schaltschrank 1 weist eine Austrittsöffnung 11 auf, über welche der Luftstrom bzw. die Spülluft austreten kann (Pfeil bei 11), so dass in den Gehäusen mangels Rückstau kein wesentlicher Überdruck auftreten kann. Zudem ist durch die Austrittsöffnung 11 gewährleistet, dass der Spülstrom durch die Gehäuse mit immer neuer Luft aus der Quelle 9 gespeist wird, da zusätzliche Luft nach dem Durchströmen aus der Öffnung 11 austreten kann.

Durch diesen seriellen Luftstrom durch die Gehäuse bzw. den Schaltschrank wird in deren Innenräumen ein allenfalls geringer Überdruck erzeugt, welcher eine Sogwirkung von Umgebungsluft (Feuchtigkeit) in das Gehäuseinnere verhindert. Weiterhin wird durch den Luftstrom (Luftspülung ein Abtransport von Feuchtigkeit aus dem Inneren der Gehäuse ermöglicht und die Bildung von Feuchtigkeit im Inneren vermieden.

Die jeweils luftdicht ausgebildeten Gehäuse (1, 5, 33, 29) sind bis auf die vorstehend erläuterte Austrittsöffnung und der jeweiligen Verbindungen für die Luftzufuhr (7, 17, 13, 14, 18) und Luftabfuhr (24, 22, 15, 11), beispielsweise mittels Dichtungen, direkter mechanischer luftdichter Kopplung, etc., luftdicht miteinander verbunden. Durch die hygienisch dichte Ausführung der Gehäuse und des gelenkten Luftstroms kann nicht nur - unter Vermeidung von Fehlströmungen - ein definierter Luftstrom erzeugt werden, sondern auch ein Eindringen von Feuchtigkeit bei einer Reinigung selbst mit aggressiven Reinigungsmedien und mit hohem Druck (beispielsweise Dampfstrahler) vermieden werden. Soweit nötig kann hierzu die Austrittsöffnung mit einem Einwegventil (geöffnet in Auslassrichtung) versehen sein.

Die luftdichten Verbindungen für die Luftzufuhr und/oder Luftabfuhr zwischen diesen Komponenten führen in bevorzugter Ausgestaltung nicht nur Druckluft zu und ab, sondern dienen auch gleichzeitig als Verbindung bzw. Kanäle für die elektrischen Versorgungsleitungen sowie Kommunikationsleitungen.

Gegebenenfalls kann nur ein Reinigungsbetrieb - auch mit höherem Druck, beispielsweise mehrere Millibar - oder auch Dauerbetrieb (Reinigungsbetrieb und Wägebetrieb) mit geringerem Druck, beispielsweise wenige Mikrobar, durchgeführt werden.

Der Motor 27 im Motorgehäuse 29 mit dem Getriebe 31 in dem Getriebegehäuse 33 dient als Fördermittelantrieb eines Wägebandes 35.

Wie aus Fig. 1 ersichtlich, kann die Verbindung zwischen Schaltschrank 1 und Wägezellengehäuse 5 als mechanische Verbindung in Form eines Stellfußes 23 ausgebildet sein. Der Stellfuß 23, ist hierzu im Inneren hohl ausgebildet, so dass das Rohr 17 bzw. der Schlauch durch diesen Stellfuß 23 hindurch vom Schaltschrank 1 in das Wägezellengehäuse mit der Wägezelle 3 führt und als erster Anschluss 13 dient. Weiterhin kann in diesem Stellfuß 23 auch (vom ersten Anschluss separat) ein weiterer Kanal bzw. zweiter Anschluss 15 für die Luftabfuhr ausgebildet sein. Hierdurch kann wenigstens ein üblicherweise vorhandener Stellfuß gleichzeitig Verbindung für die Luftzufuhr und Luftabfuhr dienen.

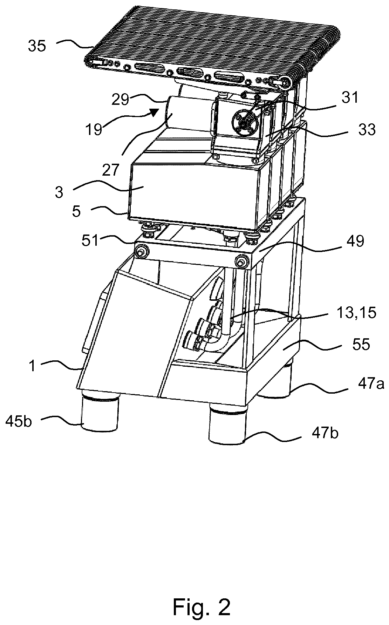

Insbesondere im Falle einer Wägevorrichtung mit mehreren Wägezellen bzw. Wägespuren (beispielsweise vier) können die Wägezellen 3 in ihren Gehäusen 5, wie in Fig. 2 dargestellt, auf einem Tragrahmen 49 eines Untergestells 55, beispielsweise mittels ihrer Stellfüße 51 befestigt sein.

Die Verbindung zur Luftzufuhr 13 und Luftabfuhr 15 zwischen den Wägezellengehäusen 5 und dem Schaltschrank 1 erfolgt im dargestellten Fall über jeweils eine parallele Verbindung (13, 15), beispielsweise starre Versorgungsrohre. Durch die Verwendung eines luftdichten hohlen Tragrahmens 49, ist es aber auch möglich, zwischen Schaltschrank 1 und Tragrahmen 49 nur eine Verbindung 13, 15 vorzusehen, wobei die Anbindung der Wägezellengehäuse 5 dann jeweils über diesen hohlen Tragrahmen 49, insbesondere über zwei voneinander getrennt ausgebildete Hohlkammern bzw. Kanälen, erfolgen kann. Selbstverständlich ist es aber auch denkbar die Luftzufuhr und Luftabfuhr über separate (zwei getrennte) Stellfüße zu realisieren.

Wie aus Fig. 2 ersichtlich, ist der Schaltschrank in das Untergestell 55 integriert, indem er selbst teilweise als Untergestell dient. Dennoch weist der Schaltschrank 1 ein eigenständiges Schrankgehäuse bzw. Wandungen auf, um eine Luftdichtigkeit zu gewährleiten und eine separate Herstellung zu ermöglichen. In dieser platzsparenden Ausgestaltung wird der Grundriss der Wägevorrichtung in seinen Abmessungen nicht überschritten. Zur Gewährleistung einer hohen Standfestigkeit weist die Wägevorrichtung in dieser Ausgestaltung in den Eckbereichen des rechteckigen Grundrisses vier Standfüße 45a,b und 47a,b auf. Wobei zwei Standfüße unterhalb des Schaltschranks 1 (zum Schaltschrank gehörig) und zwei Standfüße 47a,b am (Rest-)Untergestell 55 angeordnet sind.

Wie in Fig. 3 dargestellt, weist der Schaltschrank 1 an seiner Vorderseite eine Zugangsöffnung 53 auf. Diese Zugangsöffnung wird im Betrieb der Wägevorrichtung (Reinigungs- und Wägebetrieb) von einem nicht näher dargestellten Deckel luftdicht abgeschlossen. In diesem Deckel kann eine Anzeigeeinheit integriert sein, so dass deren nach innen gewandte Rückseite und die dort untergebrachte zugängliche entsprechende Anzeigenelektronik im Inneren des Schaltschranks 1 ebenfalls von trockner Luft durchströmt bzw. umspült wird. Selbstverständlich ist es aber auch denkbar, die Anzeigeeinheit an anderer Stelle in den Luftstrom einzubinden. So kann die Anzeigeeinheit in beliebige durchströmte Gehäuse 1, 5, 33 und 29 integriert sein oder als separates Gehäuse in den Luftstrom an beliebiger Stelle seriell eingebunden sein.

Um die Anzahl der erforderlichen Verbindungen - speziell die Anzahl der erforderlichen Dichtungen - zwischen den Gehäusen, insbesondere zwischen Schaltschrank 1 und Wägezellengehäuse 5, gering zu halten, kann wenigstens eine der Verbindungen als kombinierter Anschluss, beispielsweise, wie in Fig. 1 dargestellt, in Form eines Stellfußes 23 ausgebildet sein.

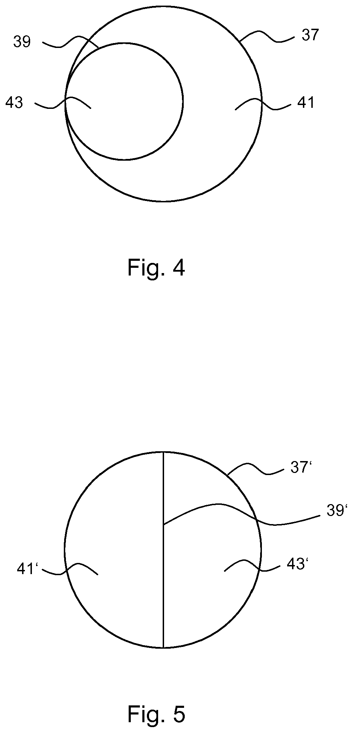

Ein kombinierter Anschluss weist hierzu, wie in Fig. 4 dargestellt, im Inneren einer Außenhülle 37 (beispielsweise Schlauch, Rohr, Stellfuß) im Querschnitt eine erste Kammer 41 und hiervon luftdicht getrennt durch eine als innere Hülle dienende Trennfläche 39 eine zweite Kammer 43 auf. Die vorzugsweise im Querschnitt kreisförmigen (oder auch polygonen) Hüllen 37 und 39 können hierbei konzentrisch oder - wie dargestellt - nicht konzentrisch ineinander geschachtelt sein, so dass die zweite Kammer die Gestalt einer Kreisfläche und die erste Kammer die Gestalt der Restfläche (regelmäßiger oder unregelmäßiger Kreisring oder wie dargestellt einer Sichel) annimmt.

Selbstverständlich ist es aber auch denkbar die erste und zweite Kammer in anderer Form luftdicht voneinander zu trennen. Beispielsweise kann die Trennfläche als gerade (oder auch gekrümmte oder geknickte) Ebene, wie in Fig. 5 dargestellt, ausgebildet sein. Hierdurch ergibt sich als erste Kammer ein Kreissegment 41' und als zweite Kammer ein Kreissegment 43', beispielsweise zwei Kreishalbflächen. Diese Kreissegmente 41' und 43' sind durch eine Trennfläche 39' (im Querschnitt als Trennlinie dargestellt) luftdicht voneinander getrennt und von einer Außenhülle 37' luftdicht umgeben.

Zusätzlich zu den dargestellten ersten und zweiten Kammern 41, 41' und 43, 43' kann in einem kombinierten Anschluss wenigstens eine weitere Kammer bzw. ein weiterer Kanal für elektrische Kabel vorgesehen sein, um kabelgebundene Stromversorgung und signaltechnische Kommunikation mit der Wägezelle, Antrieb oder Anzeigeeinheit zu ermöglichen.

Selbstverständlich ist die Erfindung nicht auf die im Ausführungsbeispiel nur stellvertretend erläuterte Verwendung von Luft begrenzt, so dass anstelle von Luft ein beliebiges, je nach Anforderung und Umgebung geeignetes Gas verwendet werden kann.

"Verbrauchte" Luft bzw. "verbrauchtes" Gas wird nach der Erfindung als serieller Luftstrom durch ein mit dem Schaltschrank verbundenes Gehäuse, vorzugsweise dem am weitesten entfernten Gehäuse durch alle verbundenen Gehäuse durch dieselbe Verbindung (kombinierter Anschluss) oder durch eine zweite Verbindung bzw. Leitung zurück in den Schaltschrank Gehäuse geführt. Dort befindet sich eine Austrittsöffnung 11 in Form eines Auslassventils, welches das Gas zurück in die Umgebung oder in eine Auffangeinrichtung (eventuell zur Wiederaufbereitung und Wiederverwendung) strömen lässt.

Durch den definierten geringen Überdruck von 10 µbar gegenüber dem Umgebungsdruck wird verhindert, dass etwaige Feuchtigkeit durch undefinierte Druckverhältnisse (z.B. Saugwirkung bei Unterdruck) in Folge von Temperaturschwankungen in das Geräteinnere gelangt. Ein weiterer Vorteil dieser Anordnung ist die Trocknung der Innenluft der gesamten Anordnung.

Die Anordnung kann unter bestimmten Voraussetzungen in explosionsgefährdeten Bereichen benutzt werden, da ein Eindringen von Umgebungsluft bzw. explosivem Gasgemisch vermieden wird.

Bevorzugt wird der Luftschlauch zuerst bis in das Getriebegehäuse, besser noch in das Motorgehäuse geführt, um mit der von dort ausströmenden Luft eine optimale Durchspülung zu erreichen.

### Bezugszeichenliste

- 1: Schaltschrank
- 3: Wägezelle
- 5: Gehäuse der Wägezelle
- 7: Gasdruckanschluss des Schaltschranks
- 9: Quelle mit Gasüberdruck
- 11: Austrittsöffnung
- 13: erster Anschluss (Gaszufuhr)
- 14: Verbindung Luftzufuhr
- 15: zweiter Anschluss (Gasabfuhr)
- 17: Gasdruckschlauch oder -rohr
- 18: Verbindung Luftzufuhr
- 19: Fördermittelantrieb
- 21: Austritt Luft
- 22: Verbindung zwischen Wägezellengehäuse und Getriebegäuse (Luftabfuhr)
- 23: Stellfuß
- 24: Verbindung zwischen Motorgehäuse und Getriebegäuse (Luftabfuhr)
- 25: Verteiler und Druckminderer
- 27: Motor
- 29: Motorgehäuse
- 31: Getriebe
- 33: Getriebegehäuse
- 35: Förderband bzw. Wägeband
- 37,37': Außenhülle Schlauch/Rohr
- 39: innere Hülle bzw. Trennfläche
- 39': Trennfläche
- 41,41': erste Kammer
- 43,43': zweite Kammer
- 45a,b: Standfuß
- 47a,b: Standfuß
- 49: Tragrahmen
- 51: Stellfuß
- 53: Zugangsöffnung Schaltschrank
- 55: Untergestell

## Patentansprüche

1. Wägevorrichtung, die wenigstens eine Wägezelle (3) in einem Wägezellengehäuse (5) und einen Schaltschrank (1) zur Aufnahme von elektrischen oder elektronischen Mitteln zur Bereitstellung der Stromversorgung der Wägezelle (3) und/oder der Kommunikation mit der Wägezelle (3) umfasst,
**dadurch gekennzeichnet, dass**
a) der Schaltschrank (1) einen Gasdruckanschluss (7) aufweist, an welchem eine Quelle mit Gasüberdruck (9) angeschlossen werden kann, und wobei der Schaltschrank (1) eine Austrittsöffnung (11) aufweist über die Gas austreten kann,
b) der Schaltschrank (1) mit dem Wägezellengehäuse (5) über einen ersten Anschluss (13) für eine Gaszufuhr in das Wägezellengehäuse (5) und einen zweiten Anschluss (15) für eine Gasabfuhr aus dem Wägezellengehäuse (5) in Verbindung steht,
c) der Gasdruckanschluss (7) mit dem ersten Anschluss (13) der Wägezelle mittels Strömungsleitmittel (17) in Verbindung steht, so dass zumindest ein Teil eines zugeführten Gases zuerst den Innenraum des Wägezellengehäuses und nachfolgend den Innenraum des Schaltschranks durchströmt und danach über die Austrittsöffnung (11) aus dem Schaltschrank austritt.

2. Wägevorrichtung nach Anspruch 1, **dadurch gekennzeichnet, dass** der Schaltschrank (1) bis auf die Austrittsöffnung (11) und/oder das Wägezellengehäuse (5) im Wesentlichen gasdicht ausgebildet sind und miteinander im Wesentlichen gasdicht in Verbindung stehen.

3. Wägevorrichtung nach Anspruch 1 oder 2, **dadurch gekennzeichnet, dass** die Strömungsleitmittel (17) als ein im Wesentlichen gasdichter Kanal, gasdichtes Rohr oder gasdichter Schlauch ausgeführt sind, so dass ein zugeführtes Gas zuerst den Innenraum des Wägezellengehäuses (5) und nachfolgend den Innenraum des Schaltschranks (1) durchströmt.

4. Wägevorrichtung nach einem der vorhergehenden Ansprüche, **dadurch gekennzeichnet, dass** der erste und/oder der zweite Anschluss (13, 15) der Wägezelle als ein Stellfuß (23) der Wägezelle (3) ausgebildet ist.

5. Wägevorrichtung nach einem der vorhergehenden Ansprüche, **dadurch gekennzeichnet, dass** der erste und der zweite Anschluss (13, 15) in Form eines einzigen kombinierten Anschlusses mit wenigstens zwei im Querschnitt getrennten Kammern ausgeführt ist.

6. Wägevorrichtung nach Anspruch 5, **dadurch gekennzeichnet, dass** die wenigstens zwei im Querschnitt getrennten Kammern ineinander verschachtelt, vorzugsweise koaxial ausgebildet sind.

7. Wägevorrichtung nach Anspruch 4 oder 5, **dadurch gekennzeichnet, dass** der kombinierte Anschluss zusätzlich eine Kammer für eine elektrische Versorgung der Wägezelle (3) und/oder elektrische Kommunikation mit der Wägezelle (3) aufweist.

8. Wägevorrichtung nach einem der vorhergehenden Ansprüche, **dadurch gekennzeichnet, dass** die Wägevorrichtung wenigstens eine weitere Wägezelle aufweist, wobei die jeweiligen gasdichten Gehäuse der wenigstens zwei Wägezellen jeweils einen weiteren ersten und zweiten Anschluss aufweisen, über welche die wenigstens zwei Wägezellen seriell untereinander oder jeweils mit dem Schaltschrank im Wesentlichen gasdicht in Verbindung stehen.

9. Wägevorrichtung nach einem der vorhergehenden Ansprüche, **dadurch gekennzeichnet, dass** die Wägevorrichtung einen Fördermittelantrieb (19) in einem Gehäuse (29, 33) aufweist, wobei dieses Antriebsgehäuse (29, 33) im Wesentlichen gasdicht ausgebildet ist und über einen dritten Anschluss für eine Gaszufuhr und einen vierten Anschluss für eine Gasabfuhr mit dem Gehäuse (5) der Wägezelle (3) im Wesentlichen gasdicht in Verbindung steht.

10. Wägevorrichtung nach Anspruch 9, **dadurch gekennzeichnet, dass** der Gasdruckanschluss (7) mit dem dritten Anschluss mittels weiterer Strömungsleitmittel in Verbindung steht, so dass zumindest ein Teil eines zugeführten Gases zuerst den Innenraum des Antriebsgehäuses (29, 33), nachfolgend den Innenraum des Wägezellengehäuses (5) oder in umgekehrter Reihenfolge und nachfolgend den Innenraum des Schaltschranks (1) durchströmt und danach über die Austrittsöffnung (11) aus dem Schaltschrank (1) austritt.

11. Verfahren zum Durchströmen einer Wägevorrichtung mit Gas nach Anspruch 1, wobei der Innenraum des Wägezellengehäuses (5) mit Gas während eines Reinigungsbetriebs und/oder auch während eines Wägebetriebs durchströmt wird, und wobei nachfolgend der Innenraum des Schaltschranks (1) mit Gas durchströmt wird.

## Claims

1. Weighing device which comprises at least one weighing cell (3) in a weighing cell housing (5) and a switch cabinet (1) for receiving electrical or electronic means for providing the current supply of the weighing cell (3) and/or for providing communication with the weighing cell (3),
**characterized in that**
a) the switch cabinet (1) has a gas pressure connection (7) to which a source of gas overpressure (9) can be connected, and wherein the switch cabinet (1) has an outlet opening (11) via which gas can exit,
b) the switch cabinet (1) is connected to the weighing cell housing (5) via a first connection (13) for supplying gas into the weighing cell housing (5) and a second connection (15) for removing gas from the weighing cell housing (5),
c) the gas pressure connection (7) is connected to the first connection (13) of the weighing cell by means of flow-channelling means (17), with the result that at least some of a supplied gas first flows through the interior of the weighing cell housing and subsequently through the interior of the switch cabinet and then exits the switch cabinet via the outlet opening (11).

2. Weighing device according to Claim 1,
**characterized in that** the switch cabinet (1) is designed in a substantially gas-tight manner, except for the outlet opening (11), and/or the weighing cell housing (5) is designed in a substantially gas-tight manner, and said switch cabinet and weighing cell housing are connected to one another in a substantially gas-tight manner.

3. Weighing device according to Claim 1 or 2,
**characterized in that** the flow-channelling means (17) are configured as a substantially gas-tight duct, gas-tight pipe or gas-tight hose, with the result that a supplied gas first flows through the interior of the weighing cell housing (5) and subsequently through the interior of the switch cabinet (1).

4. Weighing device according to one of the preceding claims, **characterized in that** the first and/or the second connection (13, 15) of the weighing cell are/is designed as a positioning foot (23) of the weighing cell (3).

5. Weighing device according to one of the preceding claims, **characterized in that** the first and second connection (13, 15) is configured in the form of a single combined connection with at least two chambers separated in cross section.

6. Weighing device according to Claim 5,
**characterized in that** the at least two chambers separated in cross section are designed to be nested one inside the other, preferably coaxially.

7. Weighing device according to Claim 4 or 5,
**characterized in that** the combined connection additionally has a chamber for electrical supply of the weighing cell (3) and/or electrical communication with the weighing cell (3).

8. Weighing device according to one of the preceding claims, **characterized in that** the weighing device has at least one further weighing cell, wherein the respective gas-tight housings of the at least two weighing cells each have a further first and second connection via which the at least two weighing cells are connected to one another in series or are each connected to the switch cabinet in a substantially gas-tight manner.

9. Weighing device according to one of the preceding claims, **characterized in that** the weighing device has a conveying means drive (19) in a housing (29, 33), wherein this drive housing (29, 33) is designed to be substantially gas-tight and is connected to the housing (5) of the weighing cell (3) in a substantially gas-tight manner via a third connection for gas supply and a fourth connection for gas removal.

10. Weighing device according to Claim 9,
**characterized in that** the gas pressure connection (7) is connected to the third connection by means of further flow-channelling means, with the result that at least some of a supplied gas first flows through the interior of the drive housing (29, 33), subsequently through the interior of the weighing cell housing (5), or in the reverse order, and subsequently through the interior of the switch cabinet (1) and then exits the switch cabinet (1) via the outlet opening (11).

11. Method for causing a gas to flow through a weighing device according to Claim 1, wherein gas is caused to flow through the interior of the weighing cell housing (5) during a cleaning operation and/or during a weighing operation, and wherein gas is subsequently caused to flow through the interior of the switch cabinet (1).

## Revendications

1. Dispositif de pesage, qui comprend au moins une cellule de pesage (3) dans un boîtier de cellule de pesage (5) et une armoire de distribution (1) pour la réception de moyens électriques ou électroniques pour la fourniture de l'alimentation en courant de la cellule de pesage (3) et/ou de la communication avec la cellule de pesage (3), **caractérisé en ce que**
a) l'armoire de distribution (1) présente un raccord de pression de gaz (7), auquel une source avec surpression de gaz (9) peut être raccordée, et dans lequel l'armoire de distribution (1) présente un orifice de sortie (11) par le biais duquel un gaz peut sortir,
b) l'armoire de distribution (1) communique avec le boîtier de cellule de pesage (5) par le biais d'un premier raccord (13) pour une amenée de gaz dans le boîtier de cellule de pesage (5) et d'un deuxième raccord (15) pour une évacuation de gaz du boîtier de cellule de pesage (5),
c) le raccord de pression de gaz (7) communique avec le premier raccord (13) de la cellule de pesage au moyen de moyens de guidage d'écoulement (17), de sorte qu'au moins une partie d'un gaz amené traverse d'abord l'espace intérieur du boîtier de cellule de pesage et ensuite l'espace intérieur de l'armoire de distribution et sort ensuite de l'armoire de distribution par le biais de l'orifice de sortie (11).

2. Dispositif de pesage selon la revendication 1, **caractérisé en ce que** l'armoire de distribution (1) jusqu'à l'orifice de sortie (11) et/ou le boîtier de cellule de pesage (5) sont réalisés sensiblement étanches aux gaz et communiquent l'un avec l'autre sensiblement étanches au gaz.

3. Dispositif de pesage selon la revendication 1 ou 2, **caractérisé en ce que** les moyens de guidage d'écoulement (17) sont réalisés en tant que canal sensiblement étanche aux gaz, tube étanche aux gaz ou tuyau étanche aux gaz, de sorte qu'un gaz amené traverse d'abord l'espace intérieur du boîtier de cellule de pesage (5) et ensuite l'espace intérieur de l'armoire de distribution (1).

4. Dispositif de pesage selon l'une quelconque des revendications précédentes, **caractérisé en ce que** le premier et/ou le deuxième raccord (13, 15) de la cellule de pesage est réalisé en tant que pied de réglage (23) de la cellule de pesage (3).

5. Dispositif de pesage selon l'une quelconque des revendications précédentes, **caractérisé en ce que** le premier et le deuxième raccord (13, 15) sont réalisés sous la forme d'un seul raccord combiné avec au moins deux chambres séparées dans la coupe transversale.

6. Dispositif de pesage selon la revendication 5, **caractérisé en ce que** les au moins deux chambres séparées dans la coupe transversale sont réalisées imbriquées l'une dans l'autre, de préférence coaxiales.

7. Dispositif de pesage selon la revendication 4 ou 5, **caractérisé en ce que** le raccord combiné présente en outre une chambre pour une alimentation électrique de la cellule de pesage (3) et/ou communication électrique avec la cellule de pesage (3).

8. Dispositif de pesage selon l'une quelconque des revendications précédentes, **caractérisé en ce que** le dispositif de pesage présente au moins une autre cellule de pesage, dans lequel les boîtiers respectifs étanches aux gaz des au moins deux cellules de pesage présentent respectivement un premier et un deuxième autre raccord, par le biais desquels les au moins deux cellules de pesage communiquent entre elles en série ou respectivement avec l'armoire de distribution sensiblement étanches aux gaz.

9. Dispositif de pesage selon l'une quelconque des revendications précédentes, **caractérisé en ce que** le dispositif de pesage présente un entraînement de moyen de transport (19) dans un boîtier (29, 33), dans lequel ce boîtier d'entraînement (29, 33) est réalisé sensiblement étanche aux gaz et communique de façon sensiblement étanche aux gaz avec le boîtier (5) de la cellule de pesage (3) par le biais d'un troisième raccord pour une amenée de gaz et un quatrième raccord pour une évacuation de gaz.

10. Dispositif de pesage selon la revendication 9, **caractérisé en ce que** le raccord de pression de gaz (7) communique avec le troisième raccord au moyen d'autres moyens de guidage d'écoulement, de sorte qu'au moins une partie d'un gaz amené traverse d'abord l'espace intérieur du boîtier d'entraînement (29, 33), ensuite l'espace intérieur du boîtier de cellule de pesage (5) ou dans l'ordre inverse et ensuite l'espace intérieur de l'armoire de distribution (1) et sort ensuite de l'armoire de distribution (1) par le biais de l'orifice de sortie (11).

11. Procédé de traversée d'un dispositif de pesage avec du gaz selon la revendication 1, dans lequel l'espace intérieur du boîtier de cellule de pesage (5) est traversé par un gaz pendant un fonctionnement de nettoyage et/ou aussi pendant un mode de pesage, et dans lequel ensuite l'espace intérieur de l'armoire de distribution (1) est traversé par un gaz.
